# EUROPEAN PATENT APPLICATION

(11) **EP 1 281 316 A2**
(43) Date of publication of application: **05.02.2003**
(21) Application number: 02016410.9
(22) Date of filing: 22.07.2002
(51) Int. Cl.: A01J 5/04, A01J 5/10

(54) **Device for making a quick connection to a vacuum line, a filtered air line or a milk line of a milking plant**

(30) Priority: 02.08.2001 IT MI20010454 U
(71) Applicant: INTERPULS S.P.A., 42020 Albinea, Reggio Emilia (IT)
(72) Inventor: Sicuri, Roberto, 43100 Parma (IT); Nicolini, Gabriele, 42042 Fabbrico, Reggio Emilia (IT)
(74) Representative: Mancini, Vincenzo, Dr.

(57) **Abstract**

The device (10; 10A) enables a quick connection to be made to a vacuum line (15), a filtered air line or a milk line forming part of a milking plant. It comprises a tubular connector (12; 12A) including a mouthpiece (20) to be inserted into a through hole (22) previously formed in the wall of the line (15). The connector (12; 12A) also comprises an annular seal gasket (24) which is carried by the connector (12; 12A) and surrounds the mouthpiece (20) in order to make contact with the outer surface of the line (15); means (28, 30, 32, 40) are also provided for pressing the connector (12; 12A) against the line (15) to ensure that the annular gasket (24) seals.

## Description

The present invention relates to a device which enables a quick connection to be made to the vacuum line, the filtered air line or the milk line forming part of a milking plant.

As known to the expert of the art, the electronic pulsator occupies a main role in a milking plant, its correct installation being essential for the proper operation of the plant.

The pulsators are installed along the vacuum line (from which they obtain the vacuum essential for the milking operation), which in some types of milking plant is positioned in the high part of the milking parlour (so-called "high line"). In other types of milking plant the vacuum line is instead positioned about 50 cm from the floor (so-called "low line").

These plants (especially the "low line" plants) do not enable the operator to gain comfortable and practical access to the vacuum line, and hence to the pulsators. A need has therefore arisen for a device which would enable an electronic pulsator to be quickly applied to the vacuum line, and to be quickly removed from the line for its programmed periodic maintenance. Such a device would also be useful in making quick connections to the filtered air and milk lines.

It should be noted in particular that in installing the pulsator on the vacuum line, it must be installed such that the relative connector is properly sealed (otherwise vacuum could be lost due to air infiltration into the vacuum line from the outside). It should also be noted that the vacuum line of a milking plant has a diameter which can vary between 52 and 114 mm, according to the plant dimensions, and that in positioning the pulsator along the vacuum line it must lie either above or to the side thereof, depending on the space available.

From these considerations it will be apparent that it is not a simple matter to conceive a device which enables an electronic pulsator to be quickly and comfortably applied to the vacuum line while satisfying the aforestated conditions.

Such an object is however achieved by the device of the present invention, comprising:
- a tubular connector including a mouthpiece to be inserted into a through hole previously formed in the wall of the line, and an annular seal gasket carried by the connector and surrounding said mouthpiece in order to make contact with the outer surface of the line;
- means for pressing the connector against the line to ensure that the annular gasket seals.

The means for pressing the connector against line (to provide the seal between the line and the connector mouthpiece) preferably comprise an elastic belt intended to embrace the line and having its two ends hookable to the connector in correspondence with relative opposing lateral positions of this latter by tensioning and hence elongating the belt.

Conveniently, the connector comprises two parts to be sealedly coupled together either directly or indirectly, the first of which comprises said mouthpiece and includes a seat for the relative seal gasket, whereas the second part provides the sealed connection to the pulsator or to whatever else is to be connected.

If useful, the connector can also comprise a third part (for example in the form of an elbow) connecting together the first and second part, the joint between this third part and the other two being securely sealed.

The invention will be more apparent from the ensuing description of two embodiments thereof relating specifically to the connection of an electronic pulsator to the relative vacuum line. In this description reference is made to the accompanying drawings, in which:
Figure 1 is a cross-section through the vacuum line of a milking plant showing, applied to the top of this line by the device of the invention, an electronic pulsator positioned above the line, the device having a connector formed from two parts;
Figure 2 is similar to Figure 1, the only difference being that the device of the invention is formed from three parts, hence enabling the electronic pulsator to be applied to the side of the vacuum line;
Figure 3 is an axial section through the first part of the connector of the device of Figure 1, with the relative seal gasket shown separated;
Figure 4 is a side view of the elastic belt of the device of Figure 1;
Figure 5 is a front view thereof in the direction of the arrow 5 of Figure 4;
Figure 6 shows the elastic belt of Figure 4 connected to the relative tensioning handle;
Figure 7 shows how the first part of the device of Figure 1 is inserted into the vacuum line, in which the relative hole for receiving it has already been prepared;
Figure 8 shows the first part of the connector already inserted in position in the line, but before tensioning the elastic belt;
Figure 9 shows the situation after tensioning the elastic belt;
Figure 10 shows how the pulsator (with the relative second part of the connector already mounted on it) is mounted on the vacuum line to which the first part has already been applied.

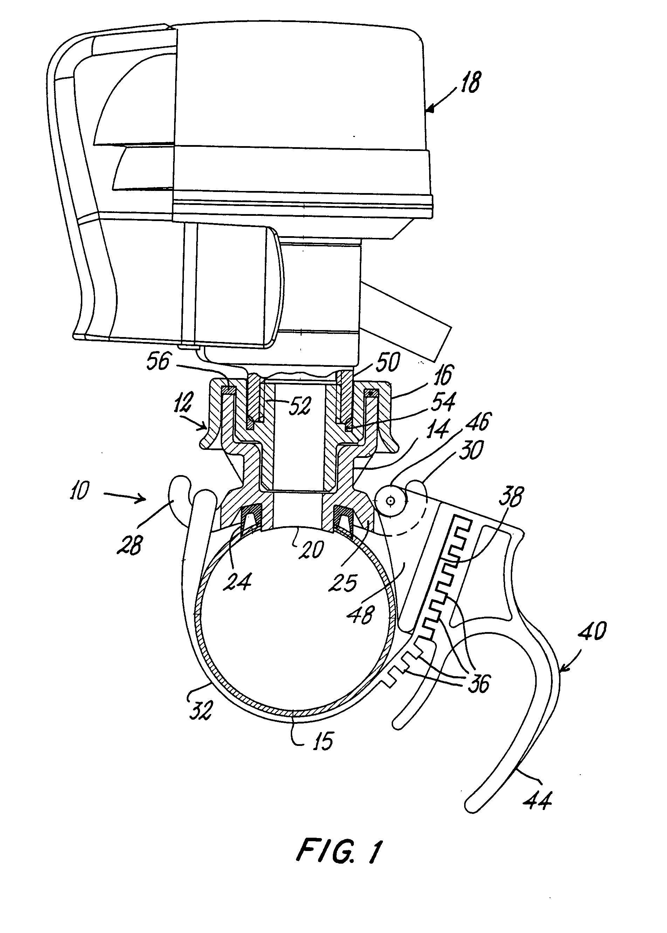

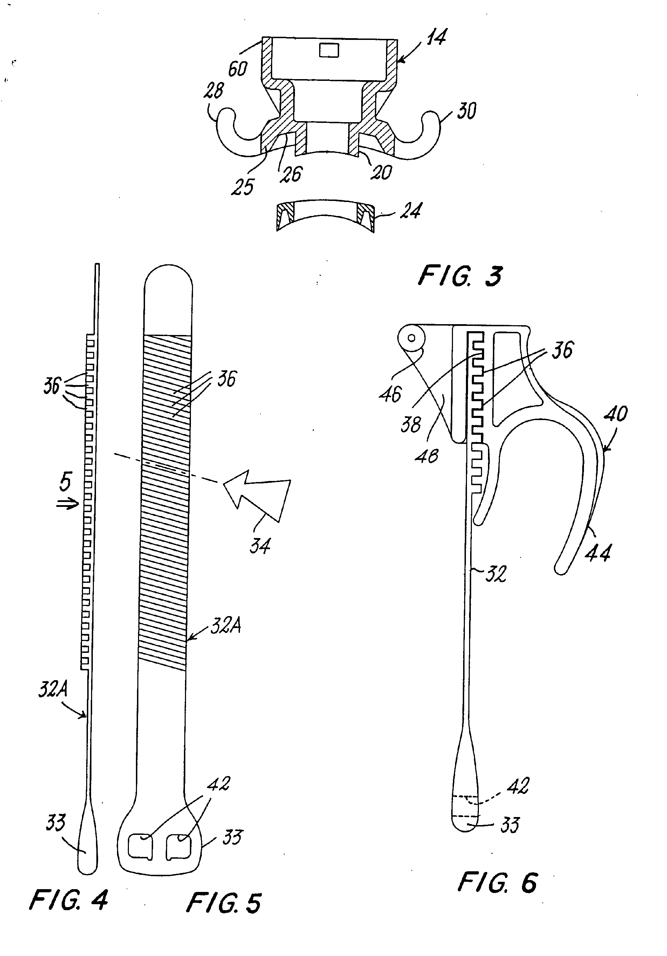

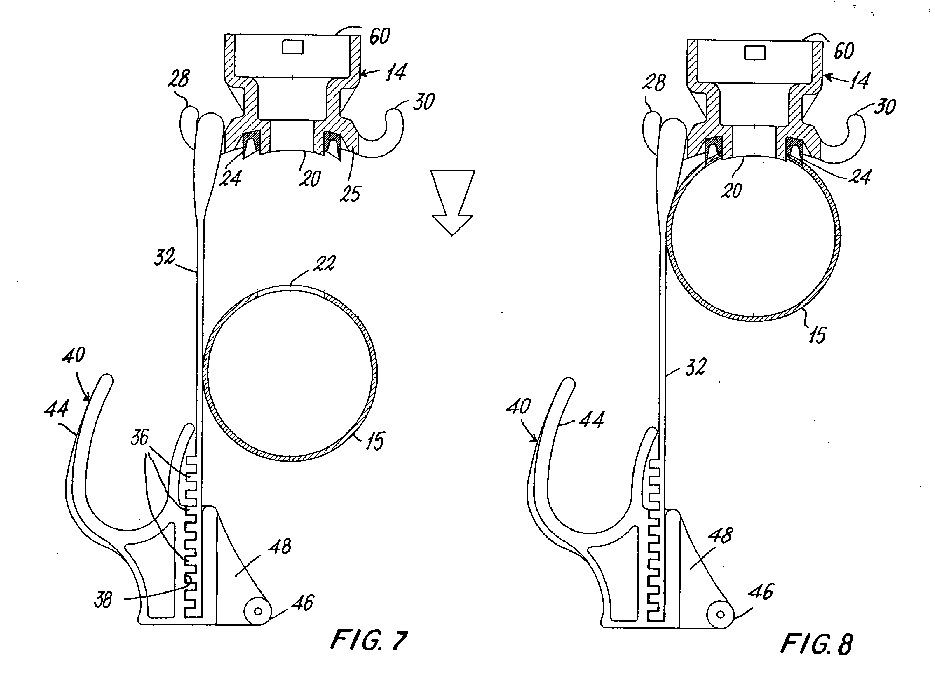

From Figure 1 it can be seen that the device 10 of the present invention comprises a connector 12 comprising a first part 14 (shown mounted on a vacuum line 15) and a second part 16 (shown mounted on the first part 14), on the second part 16 there being mounted an electronic pulsator 18. The first part 14 of the connector 12 is better visible in Figure 3, from which it can be seen that it presents a lower mouthpiece 20 insertable fairly precisely into a through hole 22 (better visible in Figure 7) previously made in the vacuum line 15. As can be seen from Figures 1, 3 and 7, the lower edge of the mouthpiece 20 is shaped to follow the shape of the wall of the line 15. From the same figures it can be seen that the first part 14 is provided with an elastic gasket 24 inserted into a relative annular seat 26 (Figure 3) provided in the first part 14 and bounded externally by a skirt-like rim 25 provided on the first part 14. This latter also presents a double pair of hooks 28 and 30 (one per side) which will be referred to hereinafter and which form part of the already mentioned means which enable the connector 12 (in particular its first part 14) to be pressed against the vacuum line 15 to ensure the seal of the annular gasket 24. These means also comprise an elastic belt, better visible in Figure 5, which is produced as shown in that figure and is indicated by 32A. This latter is produced having a length equal to the maximum usable length, so that on use it is cut to the required length (depending on the diameter of the vacuum line 15), as indicated by way of example by the arrow 34 in Figure 5 and by the corresponding dashed and dotted line, to thus obtain the belt 32.

As can be seen, a portion of the elastic belt 32A has a toothed face 36. It can also be seen that the teeth 36 are slightly inclined (the purpose of this inclination will be apparent hereinafter). When the belt 32A has been cut to length to obtain the belt 32, the toothed end portion of this latter is inserted laterally into a matching blind seat 38 provided in one side of an element 40 which facilitates the tensioning of the belt 32, the seat 38 enabling a form fit to be obtained between the belt 32 and the tensioning element 40.

As can be seen from Figure 5, the belt 32A (and hence also the belt 32 obtained from it) presents an enlarged lower end 33 in which two apertures 42 are provided to enable it to be hooked (as described hereinafter) to one (28) of the two pairs of hooks with which the first part 14 of the connector 12 is provided (as shown in Figures 1, 7, 8 and 10).

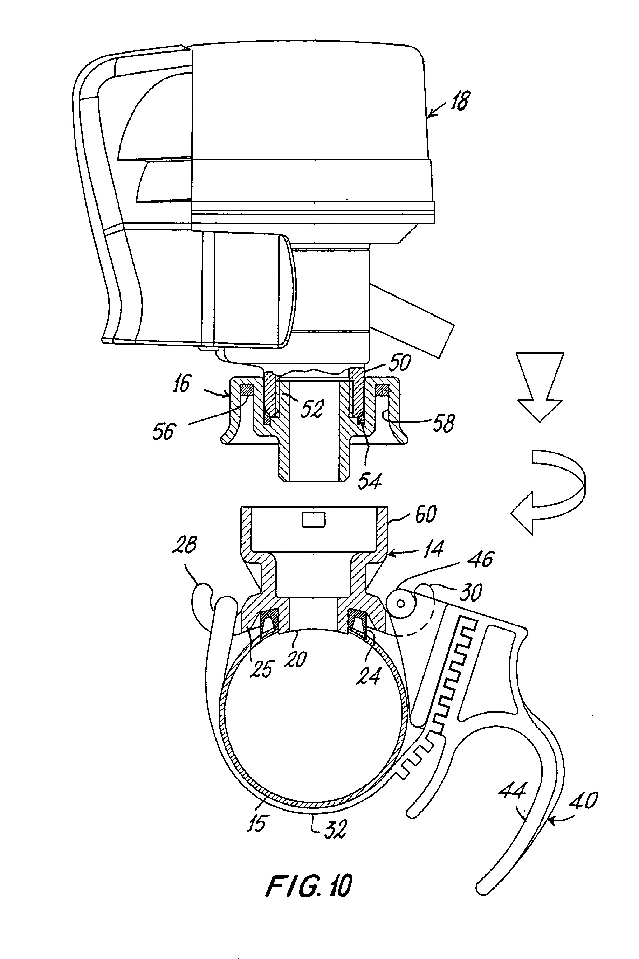

In this specific case the tensioning element 40 presents a handgripshaped part 44 and, at the opposite end to the handgrip 44, a pair of opposing idle rollers carried by a central rib 48 which forms one piece with the rest of the tensioning element 40. After manually tensioning the belt 32 by means of the tensioning element 40, the rollers 46 can be hooked to the second pair of hooks (30) with which the first part 14 of the connector 12 is provided (as shown in Figures 1 and 10).

It should be noted that instead of the handgrip 44, the tensioning element can comprise other means for tensioning the belt 32, for example a slot into which a rod or another tool can be inserted to act as a hand gripping element.

The second part 16 of the connector 12 is best visible in Figure 10, in which it is shown already applied to the electronic pulsator 18 and specifically to its lower port 50. For this purpose, this latter (50) presents an inner thread engagable with a corresponding thread provided on the outside of an upper port 52 with which the second part 16 is provided, the free end of the port 50, when screwed completely in, cooperating with an annular seal gasket 54 with which the second part 16 is provided. A second annular seal gasket 56 disposed on the base of an annular channel 58 provided in the second part 16 provides the seal between this second part 16 and the first part 14 when the socket-shaped upper mouthpiece 60 of the first part 14 is inserted into the annular channel 58 of the second part 16 (as shown in Figure 1), the connection between the two parts 14 and 16 being of bayonet type.

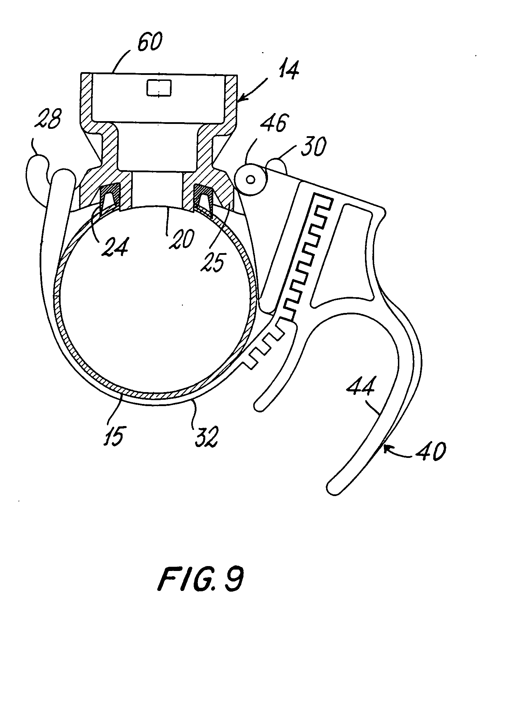

Although the method of installing the pulsator 18 on the vacuum line 15 is already apparent from the aforegoing, it will be briefly described for greater clarity. Before commencing, it should be noted (even though evident) that some of the installation sequences could be implemented in a different order from that to be described, this not being critical with regard to the device of the present invention.
1) The second part 16 of the connector 12, provided with the relative gaskets 54 and 56, is screwed into the lower port 50 of the electronic pulsator 18.
2) The vacuum line 15 is perforated at the highest point of its cross-section to obtain a through hole 22 (as shown in Figure 7, however it may be necessary instead to make the hole laterally), using a drill with a drill bit of suitable diameter (for example 20 mm).
3) The annular seal gasket 24 (Figure 3), of double lip type, is inserted into the channel 26 in the first part 14.
4) On the basis of the diameter of the vacuum line 15, the elastic belt 32A is cut to size (as indicated by the arrow 34 of Figure 5) between two adjacent teeth 36, to obtain a belt 32 of suitable length.
5) The toothed end part 36 of the belt 32 is inserted into the matching blind seat 38 in the tensioning element 40 (Figure 6), to obtain a form fit between the two.
6) The enlarged end 33 of the belt 32 is hooked, using the apertures 42, onto one (28) of the two pairs of hooks of the first part 14.
7) The lower mouthpiece 20 of the first part 14, complete with seal gasket 24 and elastic belt 32 with relative tensioning element 40, is inserted into the through hole 22 of the line 15 (Figure 8).
8) By acting on the tensioning element 40, and specifically on its handgrip 44, the elastic belt 32 is put under tension (so that it lengthens) until the idle rollers 46 of the handle 40 can be hooked onto the other pair (30) of hooks of the first part 14.
   It should be noted that, thanks to the fact that the teeth 36 of the bolt 32 are slanted, when the bolt 32 is tensioned, it cannot slide out from the blind seat 38 in the tensioning element 40.
9) The pulsator 18 (already provided with the second part 16 and relative gaskets 54 and 56) can now be coupled in bayonet manner (for this purpose, provision can be made for the coupling action to require a relative rotation of 30 degrees) by simply inserting the lower port 61 of the second part 16 into the upper mouthpiece 60 of the first part 14 and rotating it as far as it will go (a rotation limit stop being conveniently provided for this purpose), to hence obtain the situation of Figure 1.

The sequence of installation operations is evidently the same whether the through hole in the vacuum line is provided laterally instead or at the top.

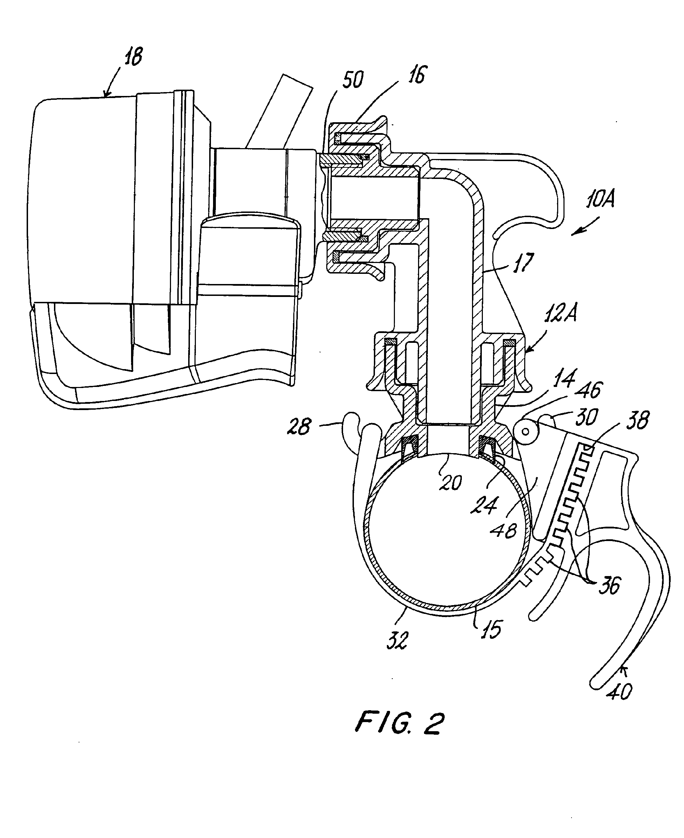

If however the pulsator is to be installed in accordance with the configuration of the device 10A of Figure 2, the only difference is due to the fact that the connector 12A comprises a third part 17 shaped as an elbow, enabling the first part 14 to be sealedly connected in conventional manner to the second part 16, as shown in that figure.

It should be noted that the elasticity of the belt 32 enables a thrust to be exerted on the first part 14 of the connector 12 or 12A, and hence on the seal gasket 24, such as to ensure a durable seal which is not affected by the presence of any slackness caused by thermal expansion of the components due to different climatic conditions. Moreover. an elastic belt which can be shortened to the required length in accordance with specific requirements enables all vacuum line diameters of practical interest to be accommodated.

It will also be immediately apparent that the device of the present invention enables quick installation of the electronic pulsator using only a pair of scissors to cut the belt 32A to size and a drill with relative drill bit to make the through hole 22 in the vacuum line 15. It should also be noted that no tool is required to remove the pulsator 18 (for example for periodic maintenance) nor to subsequently remount it.

The components of the device of the present invention are conveniently all constructed of suitable plastic material.

Finally, it should be noted that bell-shaped geometry of the second part 16 and the skirt 25 of the first part 14 provide protection against dirt, to prevent contamination of the relative seal seats.

In conclusion, it must again be stated that the use of the device of the present invention is not limited to the quick connection of an electronic pulsator to the relative vacuum line, but can usefully be used to also make quick connections to the filtered air line or to the milk line, as it ensures the necessary seal.

## Claims

1. A device (10; 10A) for making a quick connection to a vacuum line, a filtered air line or a milk line forming part of a milking plant, comprising:
- a tubular connector (12; 12A) including a mouthpiece (20) to be inserted into a through hole (22) previously formed in the wall of the line (15), and an annular seal gasket (24) carried by the connector (12; 12A) and surrounding said mouthpiece (20) in order to make contact with the outer surface of the line (15);
- means (28, 30, 32, 40) for pressing the connector (12; 12A) against the line (15) to ensure the sealing of the annular gasket (24).

2. A device (10) as claimed in claim 1, wherein the means for pressing the connector (12) against line (15) comprise an elastic belt (32) intended to embrace the line (15) and having its two ends hookable to the connector (12; 12A) in correspondence with relative opposing lateral positions of this latter (12), by tensioning the belt (32).

3. A device (10; 10A) as claimed in claim 1, wherein the connector (12; 12A) comprises two parts (14, 16) to be sealedly coupled together either directly or indirectly, the first (14) of which comprises said mouthpiece (20) and the relative seal gasket (24), whereas the second part (16) provides the sealed connection between the first part (14) and the pulsator (18) or other device.

4. A device (10A) as claimed in claim 3, wherein, the connector (12A) comprises a third part (17) sealedly connecting together the first and second part.

5. A device (10A) as claimed in claim 4, wherein the third part (17) is of elbow shape.

6. A device (10; 10A) as claimed in claim 2, wherein the means for pressing the connector (12; 12A) against the line (15) comprise two opposing pairs (28, 30) of hooks with which the connector (12; 12A) is provided, one end of the elastic belt (32) presenting a pair of apertures (42) into which one (28) of the two pairs (28, 30) of hooks is to be inserted, the other end of the elastic belt (32) being fixable to a handgrip (40) provided with a pair (46) of opposing coaxial idle rollers extending from the handgrip and arranged to cooperate with the second pair (30) of hooks to maintain the elastic belt (32) under tension.

7. A device (10; 10A) as claimed in claim 6, wherein that end portion of the elastic belt (32) distant from the end of the belt (32) presenting the two apertures (42) has a toothed face (36), at least an end part of this toothed portion (36) being laterally insertable into a matching blind seat (38) provided on one side of the tensioning element (40) to obtain a form fit between the belt (32) and the tensioning element (40).

8. A device (10; 10A) as claimed in claim 7, wherein the toothing (36) of the belt (32) is inclined to a plane transverse to the belt (32) in a direction which prevents the belt (32) withdrawing from the blind cavity (38) of the tensioning element (40) when the belt (32) is put under tension.

9. A device (10; 10A) as claimed in claim 7, wherein the belt is produced in a length (32A) determined by the maximum foreseeable diameter of the line (15), the belt (32A) then being cut between two of its adjacent teeth (36) to obtain a belt (32) of length suitable for the specific line (15).

10. A device (10; 10A) as claimed in claim 6, wherein the handgrip (40) presents a gripping element (44) of ergonomic shape.

11. A device (10; 10A) as claimed in claim 3 or 4, wherein the second part (16) of the connector (12; 12A) has a bell-shaped geometry to protect from dirt those seats which provide the seal between the said second part (16) and the first part (14) or third part (17).

12. A device (10; 10A) as claimed in claim 3 or 4, wherein the connection between the first part (14) and second part (16) or between the first part (14) and third part (17) is of bayonet type.

13. A device (10; 10A) as claimed in claim 3, wherein the connection between the second part (16) and the electronic pulsator (18) or other device is of screw type.

14. A device (10) as claimed in claim 3, wherein the annular seal gasket (24) is received in a channel (26) of the first part (14), which surrounds the mouthpiece (20) and is protected externally by an annular lip (25) of skirt type.

15. A device (10A) as claimed in claim 4, wherein the third part (17) is of elbow shape.
